# EUROPÄISCHE PATENTSCHRIFT

(11) **EP 0 891 891 B1**
(45) Veröffentlichungstag und Bekanntmachung des Hinweises auf die Patenterteilung: **13.08.2003**
(21) Anmeldenummer: 98104996.8
(22) Anmeldetag: 19.03.1998
(51) Int. Cl.: B60R 11/02

(54) **Anschlusskasten für ein Autoradio**
Junction box for an autoradio
Boîte de jonction pour une autoradio

(30) Priorität: 14.07.1997 DE 19730049
(43) Veröffentlichungstag der Anmeldung: 20.01.1999
(73) Patentinhaber: ROBERT BOSCH GMBH, 70442 Stuttgart (DE)
(72) Erfinder: Köppen, Jens, 31199 Diekholzen (DE); Arndt, Rudolf, 31177 Harsum (DE)

(56) Entgegenhaltungen:
- EP-A- 0 275 496
- DE-A- 4 014 250

## Beschreibung

Die Erfindung betrifft einen Anschlußkasten für ein Autoradio zur Befestigung an einer winkeligen Ausnehmung des Autoradiogehäuses, an dessen winkelig zueinander stehenden Wandabschnitten der Anschlußkasten mit einer breiten Seite und einer schmalen Seite anliegt, wobei Bodenkontakte des'Anschlußkastens in Anschlußkontakten des Autoradios außerhalb des Autoradiogehäuses durch eine Einschubbewegung in Richtung des Bodens kontaktierbar sind und weitere Kontakte zur Herstellung weiterer Verbindungen zu dem Autoradio vorhanden sind.

Derartige Anschlußkästen, für die die winkelige Ausnehmung des Autoradiogehäuses gemacht ist, sind beispielsweise durch das von der Blaupunkt-Werke GmbH, Hildesheim, vertriebene Autoradio Typ "Coburg 85" bekannt. Sie dienen dazu, externe Geräte oder externe Regelungen an das Autoradio anzuschließen. Darüber hinaus nehmen sie regelmäßig wenigstens eine Sicherung auf. Übliche externe Geräte, die über den Anschlußkasten an das Autoradio angeschlossen werden sind beispielsweise CD-Wechsler und Nachverstärker für die Audiosignale. Externe Regelungen betreffen die Helligkeitsregelung für die Autoradiobeleuchtung, insbesondere im Nachtdesign, sowie eine Lautstärkeregelung und ggfs. eine Stummschaltung während eine Telefonats im Auto. Die bekannten Anschlußkästen werden mit ihren als Stiftkontakte ausgebildeten Bodenkontakten in entsprechenden Anschlußbohrungen einer gedruckten Schaltungsplatine kontaktiert. Die gedruckte Schaltungsplatine ragt mit den Anschlußbohrungen aus dem Autoradiogehäuse in die winkelige, im allgemeinen rechtwinkelige, Ausnehmung hinein, so daß die Kontaktierung durch Verlötung außerhalb des Autoradiogehäuses erfolgt. Der Anschlußkasten wird dann an das Autoradiogehäuse angeschraubt, wobei die Schraubverbindung regelmäßig in der breiten Seite des Anschlußkastens vorgesehen ist.

Die breite Seite des Anschlußkastens wird regelmäßig durch eine gedruckte Schaltungsplatine abgeschlossen, die in dem Anschlußkasten mit von dem Autoradiogehäuse weg zeigenden Stekkerkontakten verbunden ist, so daß in die vom Autoradiogehäuse weg zeigende Vorderseite des Anschlußkastens entsprechende Anschlußstecker einsteckbar sind.

Da es vorkommen kann, daß die Anzahl der benötigten Verbindungskontakte zum Autoradio die Anzahl der Bodenkontakte übersteigt, ist es bekannt, an die gedruckte Schaltungsplatte des Anschlußkastens Flachbandkabel zu kontaktieren und diese als Kabelverbindungen in das Innere des Autoradios hineinzuführen und dort mit einer Steckverbindung zu kontaktieren (vgl. z.B. Autoradio Typ "Coburg 85").

Die EP-A-0 275 496 und die DE 4 014 250 A zeigen Anschlußkasten, die vollständig außehalb des Autoradiogehäuses angeordnet sind.

Die Montage und Demontage der bekannten Anschlußkästen gestaltet sich umständlich, was insbesondere auf die gesonderte Durchführung und Kontaktierung von beispielsweise Flachbandkabeln zurückzuführen ist. Eine denkbare Vergrößerung der Anzahl der Bodenkontakte scheitert an den begrenzten räumlichen Verhältnissen in der für den Anschlußkasten vorgesehenen Ausnehmung des Autoradiogehäuses.

Die Erfindung geht daher von der Problemstellung aus, die Montage und Demontage des Anschlußkastens durch eine verbesserte Kontaktierung der zusätzlichen Kontakte zu erleichtern.

Ausgehend von dieser Problemstellung ist ein Anschlußkasten der eingangs erwähnten Art dadurch gekennzeichnet, daß auf der schmalen Seite ein Gehäuseansatz vorgesehen ist, der zum Übergreifen des betreffenden Wandabschnitts des Autoradiogehäuses ausgebildet und mit Bodenkontakten zum Kontaktieren von Anschlußkontakten innerhalb des Autoradiogehäuses versehen ist.

Durch die Erfindung wird das Problem der Kontaktierung weiterer Verbindungen dadurch gelöst, daß der Anschlußkasten mit einem Gehäuseansatz in das Autoradiogehäuse hineinragt und am Gehäuseansatz mit stiftförmigen Bodenkontakten versehen ist, die mit derselben Einschubbewegung kontaktierbar sind, die für die Kontaktierung der Bodenkontakte außerhalb des Autoradiogehäuses in der Ausnehmung erforderlich ist. In einer verblüffend einfachen Lösung wird das in der Ausnehmung vorhandene Platzproblem dadurch umgangen, daß ein Teil der Kontaktierung mit einem Gehäuseansatz in das Innere des Autoradiogehäuses verlegt wird, wo auch bisher eine entsprechende Kontaktierung, allerdings über Flachbandkabel, erfolgt ist. Durch die Realisierung des Gehäuseansatzes und dessen gleichzeitiger Kontaktierung entfallen alle zusätzlichen Arbeiten für die Kontaktierung der zusätzlichen Verbindungsleitungen, die mit den Bodenkontakten außerhalb des Autoradiogehäuses nicht mehr kontaktierbar sind.

In einer bevorzugten Ausführungsform der Erfindung ist der Gehäuseansatz an dem Anschlußkasten über einen nach unten offenen Schlitz angeschlossen und zum Übergreifen eines nach oben offenen Schlitzes des Wandabschnitts vorgesehen. Die beiden Schlitze stehen dabei winkelig, vorzugsweise senkrecht, zueinander und verzahnen sich dabei, so daß der nach unten offene Schlitz des Gehäuseansatzes die Funktion eines Haltewinkels übernimmt und so die Verbindung zwischen Anschlußkasten und Autoradiogehäuse stabilisiert.

In einer besonders bevorzugten Ausführungsform ist eine Aufnahmekammer des Gehäuseansatzes oberhalb des nach unten offenen Schlitzes mit einer Haupt-Aufnahmekammer verbunden und eine in die Aufnahmekammern einlegbare Schaltungsplatine als einheitliches Stück in einer den nach unten offenen Schlitz überbrückenden Form ausgebildet. Hierdurch ist für die Kontaktierung und Verdrahtung der Anschlüsse außerhalb des Autoradiogehäuses und innerhalb des Autoradiogehäuses eine einheitliche Schaltungsplatine verwendbar.

Die erfindungsgemäße Kontaktierung der weiteren Verbindungen innerhalb des Autoradiogehäuses läßt sich in einer vorteilhaften Weise dazu ausnutzen, eine Fixierung des Anschlußkastens an dem Autoradiogehäuse ohne zusätzliche Montageschritte für die Befestigung zu ermöglichen. Hierzu ist auf der breiten Seite wenigstens ein Haltewinkel zum Übergreifen einer Oberseite des betreffenden Wandabschnitts des Autoradiogehäuses vorgesehen und wenigstens eine Seite des Anschlußkastens mit wenigstens einer Arretierungsfeder versehen, die zum Arretieren entgegen der Einschubbewegung durch Einrasten in eine zugehörige Ausnehmung in dem betreffenden Wandabschnitt am Ende der Einschubbewegung ausgebildet ist.

Durch den Haltewinkel auf der breiten Seite wird zusammen mit der Arretierung auf der schmalen Seite durch den Gehäuseansatz eine vollständige Fixierung des Anschlußkastens in der ebene parallel zum Boden des Autoradiogehäuses erreicht. Durch die Arretierungsfeder wird eine Bewegung entgegen der Einschubbewegung blockiert, so daß auch eine Arretierung senkrecht zum Boden gegeben ist. Die Fixierung erfolgt somit lediglich bei der für die Kontaktierung der Bodenkontakte erforderlichen Einschubbewegung. Bisher übliche Verschraubungen des Anschlußkastens am Autoradiogehäuse können ersatzlos entfallen.

Zur Erhöhung der Stabilität ist es zweckmäßig, wenn sich eine Arretierungsfeder auf der an einem Wandabschnitt anliegenden breiten Seite und eine Arretierungsfeder auf der schmalen Seite des Anschlußkastens befindet.

Die Erfindung soll im folgenden anhand eines in der Zeichnung dargestellten Ausführungsbeispiels näher erläutert werden. Es zeigen:
- Figur 1 -: eine Draufsicht auf eine breite Anschlußseite eines Anschlußkastens
- Figur 2 -: eine Draufsicht auf eine breite Seite eines Anschlußkastens, die an einem Wandabschnitt des Autoradiogehäuses anliegt
- Figur 3 -: eine Draufsicht auf eine schmale Seite eines Anschlußkastens
- Figur 4 -: eine perspektivische Darstellung eines Teils eines Autoradiogehäuses bestehend aus einer Bodenplatine und Seitenwänden, die eine winkelige Ausnehmung zur Aufnahme des Anschlußkastens gemäß den Figuren 1 bis 3 aufweisen
- Figur 5 -: eine Draufsicht auf die Anordnung gemäß Figur 4.

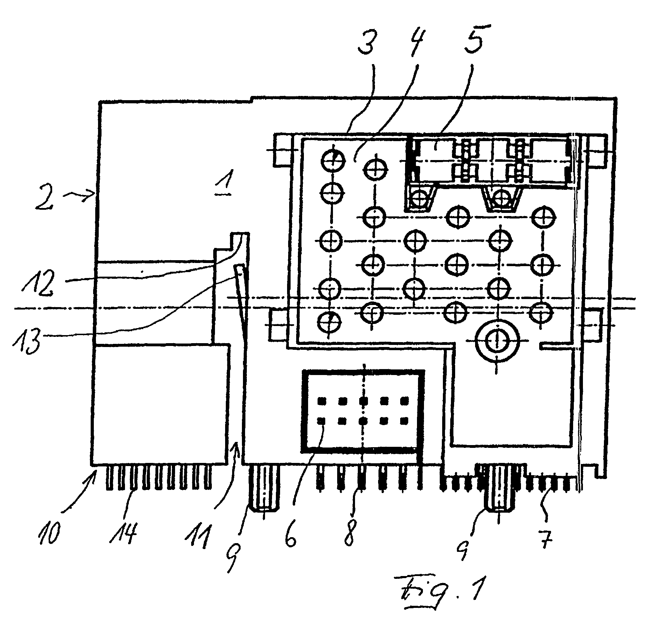

Der in den Figuren 1 bis 3 dargestellte Anschlußkasten weist auf einer in Figur 1 dargestellten Anschlußseite 1 einen im wesentlichen rechteckigen Grundkörper 2 auf, auf dem eine erhabene Rahmenwandung 3 befindet, die eine Steckeraufnahmekammer 4 und eine Sicherungsaufnahmekammer 5 ausbildet. Kontakt-Durchgangsöffnungen 6 ermöglichen die Aufnahme eines weiteren Steckers mit Stiftkontakten.

Von den Aufnahmekammern 4, 5 ragt eine erste Gruppe von stiftförmigen Bodenkontakten 7 aus der Unterkante des Grundkörpers 2 heraus. Unterhalb der Kontakt-Durchgangsöffnungen 6 befindet sich eine zweite Gruppe von stiftförmigen Bodenkontakten 8. Die Kontaktierung der Bodenkontakte 7, 8 erfordert eine Einschubbewegung von oben nach unten, also in Längsrichtung der stiftförmigen Bodenkontakte 7, 8. Die Einschubbewegung wird durch aus der Unterseite des Grundkörpers 2 herausragenden Kunststoffbolzen 9 geführt.

Der Grundkörper 2 weist einen Gehäuseansatz 10 auf, der über eine einen nach unten offenen Schlitz 11 überbrückende Brücke 12 mit dem die Aufnahmekammern 4, 5 tragenden Teil verbunden ist. In den nach unten offenen Schlitz 11 ragt eine aus dem Material des Grundkörpers 2 geformte Feder 13 hinein. Die Feder 13 ragt von unten nach oben schräg verlaufend zunehmend in den Schlitz 11 hinein.

Der Gehäuseansatz 10 weist eine dritte Gruppe von stiftförmigen Bodenkontakten 14 auf, die aus dem Grundkörper 2 nach unten vorragen.

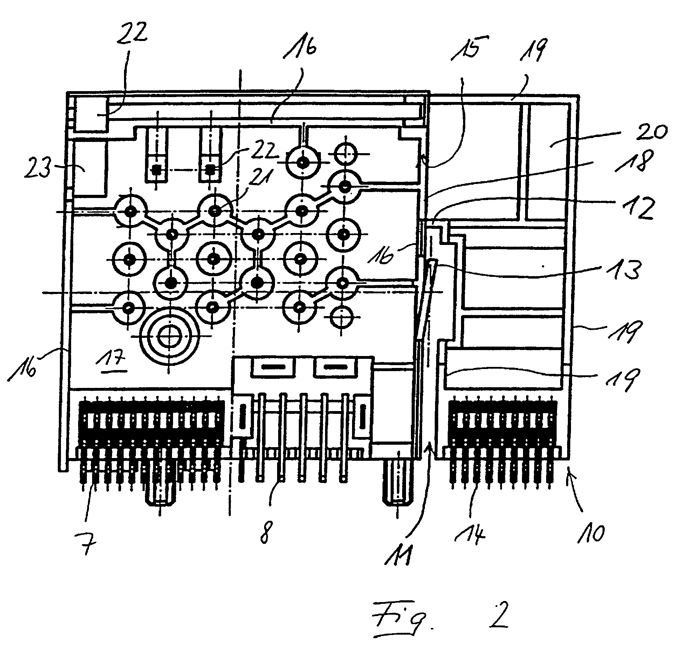

Figur 2 läßt die Gruppen der Bodenkontakte 7, 8, 14 erkennen, die im wesentlichen auf der in Figur 2 dargestellten, eine Rückseite bildenden breiten Seite 15 geführt sind.

Oberhalb der Bodenkontakte 7, 8 wird durch Begrenzungswände 16 eine Haupt-Aufnahmekammer 17 begrenzt. Oberhalb des nach unten offenen Schlitzes 11 ist die parallel zum Schlitz 11 verlaufende Begrenzungswand 16 mit einer Ausnehmung 18 versehen. Im Gehäuseansatz 10 bilden eine obere, eine seitliche und eine im wesentlichen parallel zum Schlitz 11 verlaufende Begrenzungswand 19 eine Aufnahmekammer 20, die über die Ausnehmung 18 mit der Hauptaufnahmekammer 17 verbunden ist, so daß in die über die Ausnehmung 18 miteinander verbundenen Aufnahmekammern 17, 20 eine einheitliche Platine einlegbar ist, mit der Kontaktierungen zu den Bodenkontakten 7, 8, 14 sowie zu Steckeranschlußkontakten 21 bzw. Sicherungsanschlußkontakten 22 herstellbar sind.

Figur 2 läßt am oberen Rand an dem vom Gehäuseansatz 10 entfernten Ende einen Haltewinkel 22 und eine darunter angeordnete Arretierungsfeder 23 erkennen.

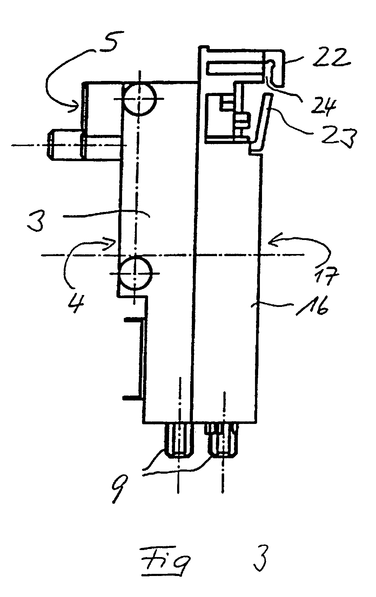

Figur 3 verdeutlicht in einer Seitenansicht die Form des Haltewinkels 22, der eine seitlich über den Körper des Anschlußkastens ragende L-Form aufweist und so einen nach unten offenen Aufnahmeschlitz 24 bildet. In die Verlängerung des nach unten offenen Aufnahmeschlitzes 24 ragt von unten zunehmend die Arretierungsfeder 23 hinein. Die Seitenansicht läßt die Wand 3 für die Stecker-Aufnahmekammer 4 und die Sicherungsaufnahmekammer 5 erkennen. Zur Rückseite hin erstreckt sich die Wand 16 für die Haupt-Aufnahmekammer 17.

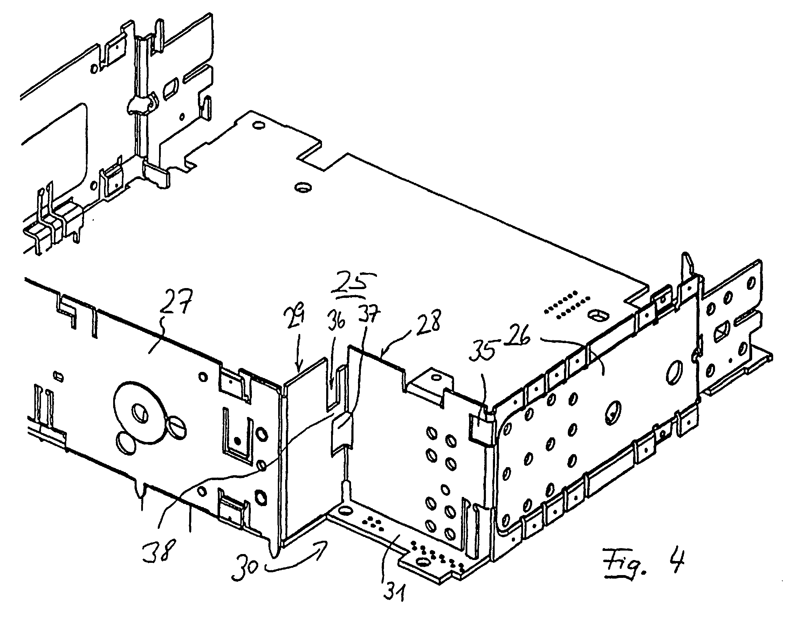

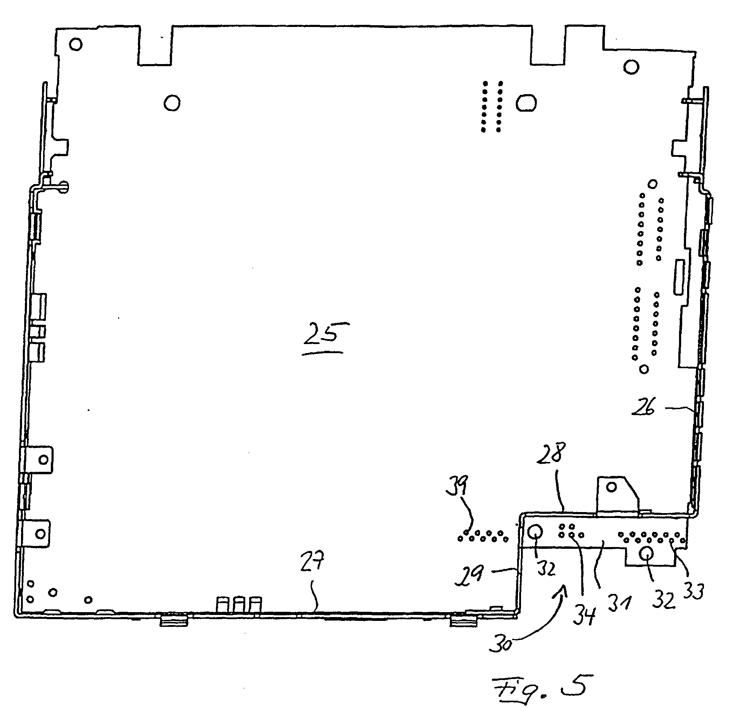

Der in den Figuren 1 bis 3 dargestellte Anschlußkasten dient zur Befestigung und Kontaktierung an einem Autoradiogehäuse, das in den hier interessierenden Teilen in den Figuren 4 und 5 dargestellt ist. Der Boden wird durch eine Bodenplatine 25 gebildet, die durch metallische Seitenwände 26 und eine metallische Rückwand 27 begrenzt ist. Durch einen die Rückwand 27 versetzt nach innen fortsetzenden Wandabschnitt 28 und einen, eine kürzere Seitenwand 26 ebenfalls nach innen versetzt fortsetzenden Wandabschnitt 29 ist eine rechtwinkelige Ausnehmung 30 gebildet. Eine Ausnehmung in der Bodenplatine 25 ist etwas kleiner ausgeführt, so daß in die Ausnehmung 30 ein Streifen 31 der Bodenplatine hineinragt. Der Streifen 31 erstreckt sich im wesentlichen parallel zu dem Wandabschnitt 28, der länger ausgebildet ist als der senkrecht dazustehende Wandabschnitt 29.

Auf dem Streifen 31 sind Führungsöffnungen 32 erkennbar, die zur Aufnahme und Führung der Führungsbolzen 9 des Anschlußkastens dienen.

In dem Streifen 31 befinden sich ferner zwei Gruppen von Kontaktöffnungen 33, 34, wobei die Kontaktöffnungen 33 zum Zusammenwirken mit den Bodenkontakten 7 und die Kontaktöffnungen 34 zum Zusammenwirken mit den Bodenkontakten 8 ausgebildet sind.

Figur 4 läßt erkennen, daß der Wandabschnitt 28 am Übergang zur Seitenwand 26 mit geringem Abstand zu seiner oberen Kante mit einer rechteckigen Ausnehmung 35 versehen ist. Diese Ausnehmung dient zum Zusammenwirken mit der Arretierungsfeder 23, wenn der Haltewinkel 22 oberhalb der Ausnehmung 35 die obere Kante des Wandabschnitts 28 so übergreift, daß die obere Kante im wesentlichen vollständig in den nach unten offenen Aufnahmeschlitz 24 des Haltewinkels 22 eingefahren ist, so daß der Haltewinkel 22 auch an der zum Innern des Autoradiogehäuses zeigenden Seite des Wandabschnitts 28 anliegt.

Figur 4 läßt ferner erkennen, daß der Wandabschnitt 29 mit einem nach oben offenen Schlitz 36 versehen ist unterhalb dessen sich eine rechteckige Ausnehmung 37 befindet.

Der nach oben offene Schlitz 36 wirkt mit dem nach unten offenen Schlitz 11 des Anschlußkastens derart zusammen, daß die beiden Schlitze 11, 36 durch die Einschubbewegung für die Bodenkontakte 7, 8 in die Kontaktöffnungen 33, 34 ineinander greifen und aufgrund ihrer Ausrichtung senkrecht zueinander miteinander verzahnen. Der zwischen dem Schlitz 36 und der Ausnehmung 37 befindliche Steg 38 drückt während der Einschubbewegung die Feder 13 aus dem Bereich des Schlitzes 11, bis die Ausnehmung 37 vollständig mit der Feder 13 fluchtet. Zu diesem Zeitpunkt schnellt die Feder 13 in die in den Figuren 1 und 2 dargestellte Ausgangsstellung zurück und greift in die Ausnehmung 37. Durch die in die Ausnehmung 37 greifende Arretierungsfeder 13 und die in die Ausnehmung 35 eingreifende Arretierungsfeder 23 ist der Anschlußkasten in der kontaktierten Stellung arretiert und kann nicht versehentlich nach oben wieder herausgezogen werden. Die Fixierung in der Ebene parallel zur Bodenplatine 25 ist durch den den Wandabschnitt 28 übergreifende Haltewinkel 22 und den nach unten offenen Schlitz 11, der ebenfalls als Haltewinkel den Wandabschnitt 29 im Bereich des nach oben offenen Schlitzes 36 übergreift, gewährleistet.

Figur 5 verdeutlicht, daß der Gehäuseansatz 10 über die Brücke 12 in das Innere des Gehäuses ragt und mit seinen Bodenkontakten 14 in Kontaktöffnungen 39 der Bodenplatine 25 im Innern der metallischen Gehäusewandung des Autoradiogehäuses kontaktiert wird.

Die bisher erforderliche zusätzliche Kontaktierung mittels Flachbandkabeln o.ä. kann daher entfallen. Die Kontaktierung der Bodenkontakte 14 in den Kontaktöffnungen 39 erfolgt mit der übrigen Kontaktierung durch die Einschubbewegung bis zur Verriegelung durch die Rastfedern 13, 23 und Fixierung des Anschlußkastens durch die Haltewinkel 22 und 12 (Brücke des nach unten offenen Schlitzes 11).

## Patentansprüche

1. Anschlußkasten für ein Autoradio zur Befestigung an einer winkeligen Ausnehmung (30) des Autoradiogehäuses, an dessen winkelig zueinander stehenden Wandabschnitten (28, 29) der Anschlußkasten mit einer breiten Seite (15) und einer schmalen Seite anlegbar ist, wobei Bodenkontakte (7, 8) des Anschlußkastens in Anschlußkontakten (33, 34) des Autoradios außerhalb des Autoradiogehäuses durch eine Einschubbewegung in Richtung des Bodens (25) des Autoradiogehäuses kontaktierbar sind und weitere Kontakte (14) zur Herstellung weiterer Verbindungen zu dem Autoradio vorhanden sind, **dadurch gekennzeichnet, daß** auf der schmalen Seite des Anschlußkastens ein Gehäuseansatz (10) vorgesehen ist, der zum Übergreifen des betreffenden Wandabschnitts (29) des Autoradiogehäuses ausgebildet und mit Bodenkontakten (14) zum Kontaktieren von Anschlußkontakten (39) innerhalb des Autoradiogehäuses versehen ist.

2. Anschlußkasten nach Anspruch 1, **dadurch gekennzeichnet, daß** der Gehäuseansatz (10) an den Anschlußkasten über einen nach unten offenen Schlitz (11) angeschlossen ist und zum Übergreifen eines nach oben offenen Schlitzes (36) des Wandabschnitts (29) vorgesehen ist.

3. Anschlußkasten nach Anspruch 1 oder 2, **dadurch gekennzeichnet, daß** eine Aufnahmekammer des Gehäuseansatzes (10) oberhalb des nach unten offenen Schlitzes (11) mit einer Haupt-Aufnahmekammer (17) verbunden ist und daß eine in die Aufnahmekammern (17, 20) einlegbare Schaltungsplatine als einheitliches Stück in einer den nach unten offenen Schlitz (11) überbrückenden Form ausgebildet ist.

4. Anschlußkasten nach einem der Ansprüche 1 bis 3, **dadurch gekennzeichnet, daß** auf der breiten Seite (15) wenigstens ein Haltewinkel (22) zum Übergreifen der Oberseite des betroffenen Wandabschnitts (28) des Autoradiogehäuses vorgesehen ist und daß wenigstens eine Seite des Anschlußkastens mit wenigstens einer Arretierungsfeder (13, 23) versehen ist, die zum Arretieren entgegen der Einschubbewegung durch Einrasten in eine zugehörige Ausnehmung (35, 37) in dem betreffenden Wandabschnitt (28, 29) am Ende der Einschubbewegung ausgebildet ist.

5. Anschlußkasten nach Anspruch 4, **dadurch gekennzeichnet, daß** sich eine Arretierungsfeder (23) auf der an einem Wandabschnitt (28) anliegenden breiten Seite (15) und eine Arretierungsfeder (13) auf der schmalen Seite des Anschlußkastens befindet.

6. Anschlußkasten nach Anspruch 4 oder 5, **dadurch gekennzeichnet, daß** der Haltewinkel (22) auf der breiten Seite (15) an dem von der schmalen Seite entfernt liegenden Ende angeordnet ist.

## Claims

1. Connection box for a car radio for attachment to an angular recess (30) in the car radio housing, whose wall portions (28, 29), which are at an angle to one another, can have a broad side (15) and a narrow side of the connection box applied to them, where contact can be made with base contacts (7, 8) on the connection box in connection contacts (33, 34) on the car radio outside the car radio housing as a result of an insertion movement in the direction of the base (25) of the car radio housing, and further contacts (14) are available for setting up further connections to the car radio, **characterized in that** the narrow side of the connection box is provided with a housing attachment (10) which is produced in order to engage over the car radio housing's relevant wall portion (29) and is provided with base contacts (14) for making contact with connection contacts (39) within the car radio housing.

2. Connection box according to Claim 1, **characterized in that** the housing attachment (10) is connected to the connection box via a slot (11) which is open at the bottom, and it is provided for engaging over a slot (36) which is open at the top in the wall portion (29).

3. Connection box according to Claim 1 or 2, **characterized in that** a holding chamber in the housing attachment (10) above the slot (11) which is open at the bottom is connected to a main holding chamber (17), and **in that** a circuit board which can be inserted into the holding chambers (17, 20) is produced as an integral piece in a form bridging the slot (11) which is open at the bottom.

4. Connection box according to one of Claims 1 to 3, **characterized in that** the broad side (15) is provided with at least one holding angle (22) for engaging over the top of the car radio housing's relevant wall portion (28), and **in that** at least one side of the connection box is provided with at least one locking spring (13, 23) which is produced so as to lock counter to the insertion movement by latching into an associated recess (35, 37) in the relevant wall portion (28, 29) at the end of the insertion movement.

5. Connection box according to Claim 4, **characterized in that** there is a locking spring (23) on the broad side (15) bearing against a wall portion (28) and there is a locking spring (13) on the narrow side of the connection box.

6. Connection box according to Claim 4 or 5, **characterized in that** the holding angle (22) is arranged on the broad side (15) at the end which is remote from the narrow side.

## Revendications

1. Boîte de branchement pour un autoradio, destiné à être fixée à un évidement (30) en forme d'angle du boîtier de l'autoradio, contre les segments de parois (28, 29) raccordés en angle duquel la boîte de branchement est appuyée par un côté large (15) et par un côté étroit , des contacts de fond (7, 8) de la boîte de branchement pouvant être mis en contact dans des contacts de branchement (33, 34) de l'autoradio en dehors du boîtier de l'autoradio par un mouvement d'enfoncement en direction du fond (25), et d'autres contacts (14) étant prévus pour l'établissement de liaisons additionnelles avec l'autoradio,
**caractérisée en ce que**
sur le côté étroit de la boîte de branchement, est prévu un appendice de boîtier (10) qui est formé de manière à enjamber le segment de paroi correspondant (29) du boîtier de l'autoradio et est muni de contacts de fond (14) pour la mise en contact de contacts de branchement (39) situés à l'intérieur du boîtier de l'autoradio.

2. Boîte de branchement selon la revendication 1,
**caractérisée en ce que**
l'appendice (10) du boîtier est relié à la boîte de branchement par l'intermédiaire d'une fente (11) s'ouvrant vers le bas, et est prévu pour enjamber une fente (36) s'ouvrant vers le bas du segment de paroi (29).

3. Boite de branchement selon la revendication 1 ou 2,
**caractérisée en ce que**
une chambre de réception de l'appendice du boîtier (10) est reliée, au-dessus de la fente (11) s'ouvrant vers le bas, à une chambre de réception principale (17) et
une carte de circuit imprimé qui peut être réalisée sous la forme d'une pièce unique, qui peut être insérée dans les chambres de réception (17, 20), est réalisée sous une forme qui enjambe la fente (11) s'ouvrant vers le bas.

4. Boîte de branchement selon la revendication 1 ou 2,
**caractérisée en ce que**
il est prévu, sur le côté large (15), au moins une patte coudée de retenue (22) destinée à enjamber un côté supérieur du segment de paroi correspondant (28) du boîtier de l'autoradio et, au moins un côté de la boîte de branchement est muni d'au moins un ressort de verrouillage (13, 23) formé pour protéger du mouvement en sens inverse du mouvement d'enfoncement, en s'enclenchant à la fin du mouvement d'enfoncement dans un évidement correspondant (35, 37) ménagé dans le segment de paroi correspondant (28, 29).

5. Boîte de branchement selon la revendication 4,
**caractérisée en ce que**
un ressort de verrouillage (23) se trouve sur le côté large (15) adjacent à un segment de paroi (28) et un ressort de verrouillage (13) se trouve sur le côté étroit de la boîte de branchement.

6. Boîte de branchement selon la revendication 4 ou 5,
**caractérisée en ce que**
la patte coudée de retenue (22) est disposée sur le côté large (15), à l'extrémité qui est éloignée du côté étroit.
